# FASCICULE DE BREVET EUROPEEN

(11) **EP 1 405 743 B1**
(45) Date de publication et mention de la délivrance du brevet: **22.11.2006**
(21) Numéro de dépôt: 03021705.3
(22) Date de dépôt: 25.09.2003
(51) Int. Cl.: B60H 1/00

(54) **Dispositif de chauffage et/ou climatisation de l'habitacle d'un véhicule automobile, à perte de charge réduite**
Vorrichtung zur Heizung und/oder Klimatisierung eines Fahrzeuginnenraumes mit reduziertem Druckverlust
Heating and/or air conditioning device for a motor vehicle passenger compartment, with reduced pressure loss

(30) Priorité: 01.10.2002 FR 0212125
(43) Date de publication de la demande: 07.04.2004
(73) Titulaire: VALEO CLIMATISATION, 78321 La Verrière (FR)
(72) Inventeur: Lebecq, Olivier, 78390 Bois d'Arcy (FR); Auvity, Michel, 78140 Velizy (FR)

(56) Documents cités:
- DE-A- 3 619 935
- DE-A- 3 940 362
- FR-A- 2 720 695
- FR-A- 2 742 383

## Description

L'invention se rapporte aux équipements des véhicules automobiles. DE 3940362 montre un tel équipement selon le préambule de la première revendication

Elle concerne plus particulièrement un dispositif de chauffage et/ou climatisation de l'habitacle d'un véhicule automobile, comprenant un boîtier agencé pour être disposé en arrière d'un tablier séparant le compartiment moteur de l'habitacle, le boîtier étant muni d'une arrivée d'air froid et logeant un radiateur de chauffage, le dispositif comprenant en outre des moyens de mixage d'air pour produire un flux d'air à température ajustée, ainsi que des sorties de dégivrage, d'aération et de chauffage-pieds alimentées par ce flux d'air à température ajustée.

Dans les dispositifs connus de ce type, l'arrivée d'air du boîtier est reliée à la sortie d'un pulseur d'air, encore appelé soufflerie, comprenant un moteur électrique entraînant une turbine pour assurer la mise en mouvement d'un flux d'air. Entre le pulseur d'air et le boîtier, est généralement prévu un évaporateur d'un circuit de climatisation, lorsque le véhicule est équipé d'une telle option. En ce cas, le boîtier peut être alimenté par de l'air froid, éventuellement climatisé.

Les sorties de dégivrage, d'aération et de chauffage-pieds du boîtier sont reliées, par l'intermédiaire de conduites appropriées, à des buses débouchant en des endroits choisis de l'habitacle.

La sortie de dégivrage est reliée à au moins une buse de dégivrage prévue en partie supérieure de la planche de bord et à la base du pare-brise, tandis que la sortie d'aération est reliée à différentes buses disposées généralement en partie frontale de la planche de bord, et que la sortie de chauffage-pieds alimente des buses disposées dans la partie inférieure de l'habitacle.

Dans les dispositifs connus de ce genre, le flux d'air à température ajustée est obtenu en mélangeant, en proportions réglables, un flux d'air chaud issu d'une branche d'air chaud contenant le radiateur de chauffage et un flux d'air froid issu d'une branche d'air froid. Ce mélange est généralement obtenu par un volet de mixage interposé à l'intersection de la branche d'air chaud et de la branche d'air froid. Le flux d'air à température ajustée, ainsi obtenu, parvient à une chambre de mixage qui communique avec les sorties d'air précitées.

Dans les dispositifs connus, cette chambre de mixage est disposée en partie arrière du boîtier, c'est-à-dire du côté de la face frontale de la planche de bord.

Les termes "avant" et "arrière" se réfèrent à la configuration habituelle d'un véhicule automobile, dans lequel le compartiment moteur est placé à l'avant du véhicule, tandis que l'habitacle est situé à l'arrière du véhicule, en étant séparé de celui-ci par un tablier formant cloison transversale de séparation.

Du fait que la chambre de mixage est située vers l'arrière, il est nécessaire de prévoir des conduits de configuration complexe pour relier la chambre de mixage aux sorties d'air, notamment à la sortie dégivrage et à la sortie de chauffage-pieds qui doivent être situées vers l'avant du dispositif, c'est-à-dire à proximité du tablier.

Ceci entraîne des pertes de charge importantes, d'où une consommation électrique importante du pulseur d'air.

En outre, l'architecture de ces dispositifs connus est mal adaptée à la réalisation d'une séparation gauche/droite pour la température du flux d'air envoyé dans l'habitacle. On sait en effet qu'il existe des dispositifs élaborés qui permettent d'envoyer des flux d'air à température différente du côté gauche et du côté droit de l'habitacle.

Ces dispositifs connus ont, en outre, pour inconvénient d'entraîner une stratification importante de température entre le flux d'air chaud et le flux d'air froid dans certains modes de température, en particulier dans le mode "aération/pieds" dans lequel un flux d'air froid est envoyé aux buses d'aération, tandis qu'un flux d'air chaud est envoyé aux buses de chauffage-pieds.

Dans les dispositifs connus de ce type, le pulseur d'air est habituellement implanté latéralement par rapport au boîtier, c'est-à-dire à droite ou à gauche, en formant un ensemble généralement oblong implanté dans une direction générale horizontale.

Cet agencement ne permet pas d'offrir un dispositif identique convenant aussi bien à un véhicule à direction à droite qu' à un véhicule à direction à gauche du fait d'interférences avec la colonne de direction.

L'invention a notamment pour but de surmonter les inconvénients précités.

Elle vise en particulier à proposer un dispositif du type ci-dessus offrant une architecture originale permettant de réduire les pertes de charge générées par la circulation du flux d'air.

L'invention vise encore à procurer un dispositif minimisant les stratifications d'air chaud et d'air froid pour certains modes de fonctionnement.

Elle vise encore à procurer un dispositif pouvant être utilisé aussi bien dans le cas d'une direction à gauche que dans le cas d'une direction à droite.

L'invention propose à cet effet un dispositif de chauffage et/ou climatisation de l'habitacle d'un véhicule automobile, comme défini en introduction, dans lequel l'arrivée d'air froid débouche dans une chambre d'air froid située à l'arrière du boîtier du côté de la sortie aération, dans lequel une chambre d'air chaud est située à l'avant du boîtier du côté des sorties dégivrage et chauffage-pieds en étant alimentée par un flux d'air issu de la chambre d'air froid et/ou réchauffé en traversant le radiateur de chauffage dans une direction généralement horizontale de l'arrière vers l'avant, et dans lequel la chambre d'air froid et la chambre d'air chaud communiquent avec deux chambres de mixage alimentant les sorties d'air.

Grâce à cet agencement particulier, l'arrivée d'air froid se trouve à proximité immédiate de la sortie aération qui est agencée pour recevoir généralement un flux d'air froid ou éventuellement un flux d'air mixé à température modéré, tandis que la chambre d'air chaud est située à proximité immédiate des sorties de dégivrage et de chauffage-pieds qui sont destinées à être alimentées par un flux d'air chaud.

Du fait de cette proximité, les sorties du boîtier peuvent être reliées aux buses correspondantes par des conduites de longueur réduite, ce qui diminue les pertes de charge et donc l'énergie électrique consommée par le pulseur d'air.

Ceci est obtenu par la disposition particulière de la chambre d'air froid et de la chambre d'air chaud, entre lesquelles est interposé le radiateur de chauffage. Celui-ci permet le réchauffage d'un flux d'air froid issu de la chambre d'air froid qui traverse le radiateur dans une direction généralement horizontale de l'arrière vers l'avant, c'est-à-dire dans un sens inhabituel.

Le radiateur de chauffage est avantageusement implanté dans une position sensiblement verticale et transversale entre la chambre d'air froid et la chambre d'air chaud.

Dans un mode de réalisation préféré de l'invention, le dispositif comprend deux chambres de mixage d'air, à savoir une chambre de mixage supérieure communiquant avec la sortie dégivrage et la sortie aération, et une chambre de mixage inférieure communiquant avec la sortie chauffage-pieds, les moyens de mixage étant interposés entre ces deux chambres de mixage et la chambre d'air froid et la chambre d'air chaud.

Cet agencement particulier, qui se différencie des solutions connues à une seule chambre de mixage, permet de produire deux zones de mixage à proximité immédiate des sorties d'air qu'elles desservent respectivement. Cet agencement contribue aussi à diminuer les pertes de charge.

Dans ce mode de réalisation préféré, les moyens de mixage comprennent avantageusement un volet de mixage supérieur déplaçable entre une position dite "tout chaud" en laquelle il obture une ouverture supérieure faisant communiquer la chambre d'air froid et la chambre de mixage supérieure au travers du radiateur de chauffage et une position dite "tout froid" en laquelle il obture au moins en partie une ouverture centrale faisant communiquer la chambre d'air froid et la chambre d'air chaud, ainsi qu'un volet de mixage inférieur déplaçable entre la position dite "tout chaud" en laquelle il obture une ouverture inférieure faisant communiquer la chambre d'air froid et la chambre de mixage inférieure au travers du radiateur de chauffage et la position dite "tout froid" en laquelle il obture au moins en partie l'ouverture centrale faisant communiquer la chambre d'air froid et la chambre d'air chaud.

Ainsi, dans la position dite "tout chaud", tout le flux d'air froid de la chambre d'air froid traverse le radiateur de chauffage et produit ainsi un flux d'air chaud qui parvient à la chambre d'air chaud. Ce flux d'air chaud gagne ensuite la chambre de mixage supérieure et la chambre de mixage inférieure pour alimenter les sorties d'air appropriées.

En revanche, dans la position dite "tout froid", le flux d'air froid est envoyé directement dans la chambre de mixage supérieure et la chambre de mixage inférieure et est ensuite envoyé vers les sorties d'air appropriées.

Ces volets peuvent prendre des positions intermédiaires pour ajuster en proportions réglables le flux d'air froid et le flux d'air chaud parvenant dans les deux chambres de mixage.

Dans le mode de réalisation préféré de l'invention, le volet de mixage supérieur et le volet de mixage inférieur sont des volets de type drapeau montés pivotants autour d'axes respectifs qui s'étendent parallèlement entre eux et dans une direction sensiblement horizontale.

Le volet de mixage supérieur et le volet de mixage inférieur sont reliés avantageusement à des moyens de commande agencés pour les faire pivoter de manière coordonnée selon une loi choisie.

La chambre de mixage supérieure peut loger des moyens déflecteurs agencés pour dévier une partie du flux d'air chaud issu du radiateur de chauffage vers la sortie aération.

Comme indiqué précédemment, la disposition de la chambre d'air froid vers l'arrière permet une proximité de celle-ci avec la sortie aération.

L'invention tire parti de cette proximité en prévoyant une sortie d'aération directe qui est agencée pour être alimentée uniquement en air froid et envoyer cet air froid directement dans l'habitacle.

De la sorte, il n'existe aucune interférence avec les moyens de chauffage.

Dans l'invention, la sortie chauffage-pieds alimente de préférence au moins une buse avant et au moins une buse arrière. Cela permet d'envoyer un flux d'air chaud dans une région avant et dans une région arrière de l'habitacle.

Comme déjà indiqué, le dispositif comprend avantageusement un pulseur d'air agencé pour envoyer de l'air froid, éventuellement climatisé, dans l'arrivée d'air du boîtier. Pour cela, un évaporateur peut être interposé entre le pulseur d'air et l'arrivée d'air du boîtier.

Le pulseur d'air peut être implanté suivant différentes positions par rapport au boîtier.

Toutefois, dans un mode de réalisation préféré de l'invention, ce pulseur d'air est disposé latéralement par rapport au boîtier pour former ainsi un ensemble oblong agencé pour être implanté dans une position générale horizontale contre le tablier. Cette disposition permet d'intégrer l'ensemble boîtier-pulseur d'air dans la planche de bord et est compatible avec une direction à gauche ou une direction à droite. Ainsi, un même dispositif peut être utilisé aussi bien dans les deux cas.

Bien entendu, l'invention n'est pas limitée à cette implantation latérale du pulseur d'air. Il est envisageable aussi de disposer ce pulseur d'air soit au-dessus, soit au-dessous du boîtier.

Dans la description qui suit, faite seulement à titre d'exemple, on se réfère aux dessins annexés, sur lesquels :
- la Figure 1 est une vue en coupe horizontale d'un dispositif de chauffage et/ou climatisation de l'invention implanté en arrière d'un tablier d'un véhicule automobile ;
- la Figure 2 est une vue en coupe verticale selon la ligne II-II de la Figure 1 ;
- la Figure 3 est une vue en coupe analogue à la Figure 2 montrant le dispositif dans un mode dit "tout chaud" ;
- la Figure 4 est une vue en coupe analogue à la Figure 2 montrant le dispositif dans un mode dit "tout froid" ; et
- la Figure 5 est une vue en coupe analogue à la Figure 2 montrant le dispositif dans un mode de mixage.

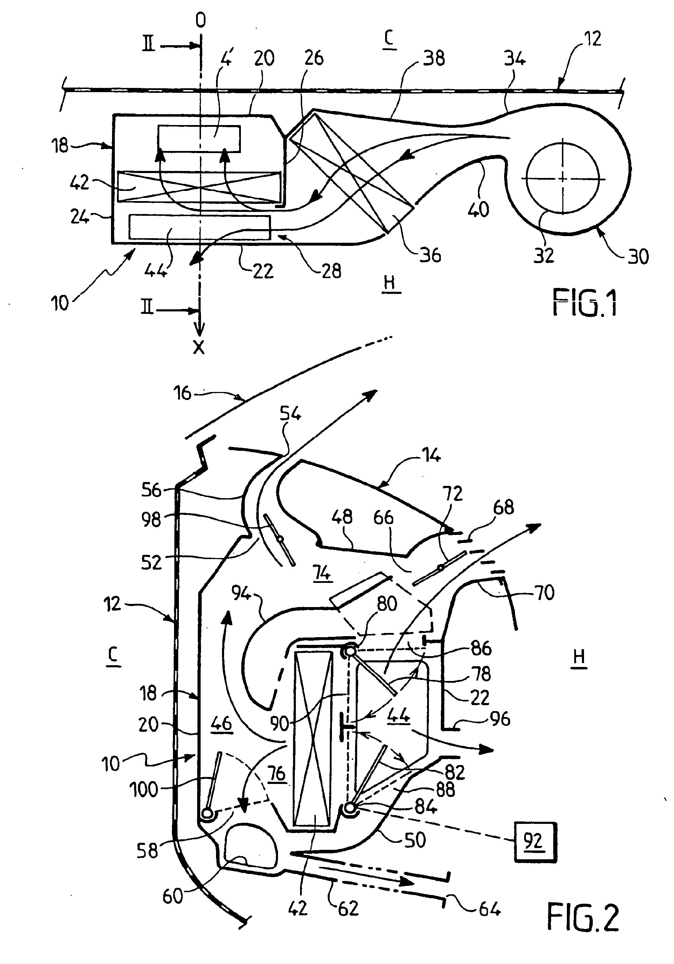

On se réfère conjointement aux Figures 1 et 2 qui montrent un dispositif de chauffage et/ou climatisation selon l'invention désigné dans son ensemble par la référence 10. Le dispositif 10 est implanté dans l'habitacle H d'un véhicule automobile, en arrière d'un tablier 12 formant cloison transversale de séparation entre l'habitacle H et le compartiment moteur C. Le compartiment moteur C est disposé vers l'avant par rapport à l'habitacle H, comme montré par l'axe orienté OX qui constitue l'axe longitudinal du véhicule. Comme on peut le voir sur la Figure 1, le dispositif 10 forme un ensemble oblong qui s'étend dans une direction transversale et généralement horizontale. L'ensemble du dispositif 10 est logé dans la planche de bord 14 du véhicule (Figure 2), laquelle fait saillie dans l'habitacle à partir du tablier 12. On aperçoit également sur la Figure 2 la base du pare-brise 16 du véhicule.

Comme on le voit sur la Figure 1, le dispositif 10 comprend un boîtier 18 de forme générale parallélépipédique limité par une paroi antérieure 20, une paroi postérieure 22, une paroi latérale 24 (sur le côté gauche de la Figure 1) et une paroi latérale 26 (sur le côté droit de la Figure 1). Au travers de la paroi 26, est aménagée une arrivée d'air 28. Cette dernière est alimentée par un flux d'air en provenance d'un pulseur d'air 30 (encore appelé soufflerie) comprenant une turbine 32 entraînée en rotation autour d'un axe généralement vertical par un moteur électrique à vitesse variable (non représenté). Le pulseur 30 comprend une enveloppe 34 en forme de volute qui est reliée à l'arrivée d'air 28 par un conduit 38 dans lequel est logé un évaporateur 36 relié à un circuit classique de climatisation. Il en résulte que le boîtier 18 peut être alimenté soit par de l'air froid, soit par de l'air climatisé.

Le conduit 38 présente une zone de rétrécissement 40 au niveau du raccordement avec l'enveloppe 34. Cette zone de rétrécissement facilite le passage de la colonne de direction (non représentée) du véhicule lorsque cette colonne est située du côté droit de l'axe OX sur la Figure 1. Bien entendu, la colonne de direction peut être située aussi du côté gauche de l'axe OX, dans une position symétrique.

Ainsi, le dispositif 10 se prête aussi bien à une conduite à droite qu'à une conduite à gauche. Le boîtier 18 proprement dit est, quant à lui, implanté au centre, l'axe OX s'étendant sensiblement à mi-distance des parois latérales 24 et 26.

Le boîtier 18 loge intérieurement un radiateur de chauffage 42 (Figures 1 et 2) qui est implanté dans une position sensiblement verticale et transversale. L'arrivée d'air froid 28 débouche dans une chambre d'air froid 44 située à l'arrière du boîtier 18 en étant limitée, au moins en partie, par la paroi postérieure 22. Cette chambre d'air froid est propre à fournir un flux d'air froid qui traverse le radiateur de chauffage 42 pour y être réchauffé et alimenter ainsi une chambre d'air chaud 46. Cette chambre 46 est située à l'avant du boîtier, en étant limitée, au moins en partie, par la paroi antérieure 20. Autrement dit, cette chambre d'air chaud 46 est située proche du tablier 12.

Comme on le voit sur la Figure 2, le boîtier 18 est en outre délimité par une paroi supérieure 48 et une paroi inférieure 50 qui relient les parois 20, 22, 24 et 26 précitées en formant un ensemble de forme sensiblement parallélépipédique. Le boîtier 48 comprend plusieurs sorties d'air propres à desservir différentes buses débouchant dans l'habitacle H.

Il comprend notamment une sortie de dégivrage 52 prévue dans la paroi supérieure 48 et à proximité de la paroi antérieure 20. Cette sortie est ainsi placée en partie supérieure et vers l'avant, c'est-à-dire proche du tablier 12. La sortie de dégivrage 52 alimente au moins une buse de dégivrage 54 placée à proximité de la base du pare-brise 16, par l'intermédiaire d'un conduit 56. Comme on peut le voir sur la Figure 2, ce conduit 56 présente une longueur réduite du fait de la proximité entre la sortie de dégivrage 52 et la ou les buses de dégivrage 54.

Le boîtier comprend en outre une sortie de chauffage-pieds 58 qui est aménagée en partie inférieure et vers l'avant, c'est-à-dire à proximité du tablier. Cette sortie 58 alimente au moins une buse 60 de chauffage-pieds débouchant dans la partie avant de l'habitacle et un conduit 62 menant à une ou plusieurs buses 64 (représentées schématiquement sur la Figure 2) pour envoyer un flux d'air chaud vers la partie arrière de l'habitacle. Du fait de l'implantation de la sortie 58 vers le bas et vers l'avant, on diminue là aussi la longueur des conduits qui alimentent les buses de chauffage-pieds.

Enfin, le boîtier 18 comprend une sortie d'aération 66 placée en partie supérieure et vers l'arrière, c'est-à-dire dans la région où la paroi supérieure 48 et la paroi postérieure 22 se rejoignent. La sortie 66 alimente au moins une buse d'aération 68 aménagée dans la planche de bord, par l'intermédiaire d'un conduit 70. Là aussi, du fait de la proximité de la ou des buses 68 et de la sortie 66, le conduit 70 peut avoir une longueur réduite. Ainsi, les conduits précités ont des longueurs réduites, ce qui diminue les pertes de charge.

Comme on peut le voir également sur la Figure 2, un volet de réglage 72 est logé dans le conduit 70 pour contrôler le débit du flux d'air envoyé dans l'habitacle H par la ou les buses d'aération 68.

Le boîtier 18 délimite en outre deux chambres de mixage d'air, à savoir une chambre de mixage supérieure 74 qui s'étend au-dessus du radiateur 42 et une chambre de mixage inférieure 76 qui s'étend en dessous du radiateur 42. La chambre de mixage supérieure 74 communique avec la sortie dégivrage 52 et la sortie aération 66, tandis que la chambre de mixage inférieure 76 communique avec la sortie chauffage-pieds 58.

Dans le boîtier, sont en outre logés des moyens de mixage pour alimenter, en proportions réglables, chacune des chambres de mixage 74 et 76 par de l'air froid provenant de la chambre d'air froid 44 et de l'air chaud provenant de la chambre d'air chaud 46. Ces moyens de mixage comprennent deux volets, à savoir un volet de mixage supérieur 78, ici de type drapeau, monté pivotant autour d'un axe 80, dans l'exemple sensiblement horizontal, et un volet 82, ici également de type drapeau, monté pivotant autour d'un axe 84 parallèle à l'axe 80.

Comme on le voit sur la Figure 2, la chambre d'air froid 44 est propre à communiquer, d'une part, avec la chambre de mixage supérieure 74 au travers d'une ouverture supérieure 86 et, d'autre part, avec la chambre de mixage inférieure au travers d'une ouverture inférieure 88. En outre, la chambre d'air froid 44 communique avec la chambre d'air chaud 46 au travers d'une ouverture centrale 90 de forme générale rectangulaire, bordée en partie supérieure par l'axe 80 du volet 78 et en partie inférieure par l'axe 84 du volet 82.

Le volet supérieur 78 est déplaçable entre une position dite "tout chaud" en laquelle il obture l'ouverture supérieure 86 et une position dite "tout froid" en laquelle il obture au moins en partie l'ouverture centrale 90. De son côté, le volet inférieur 82 est déplaçable entre cette position dite "tout chaud" en laquelle il obture l'ouverture inférieure 88 et la position dite "tout froid" en laquelle il obture au moins en partie l'ouverture centrale 90 . Les deux volets peuvent occuper une multitude de positions intermédiaires entre les positions précitées. Sur la Figure 2, ces deux volets sont précisément dans des positions intermédiaires.

Le volet de mixage supérieur 78 et le volet de mixage inférieur 82 sont reliés à des moyens de commande 92 (représentés schématiquement sur la Figure 2) agencés pour les faire pivoter de manière coordonnée et selon une loi choisie.

Dans la chambre de mixage supérieure 74, est logé un déflecteur 94 agencé pour dévier une partie du flux d'air chaud ayant traversé le radiateur de chauffage 42 vers la sortie aération 66.

Par ailleurs, la chambre d'air froid 44 communique directement avec une sortie aération directe 96 débouchant dans la planche de bord. Cette sortie 96 est agencée pour être alimentée uniquement en air froid et envoyer cet air froid directement dans l'habitacle, sans risque d'interférence avec un flux d'air chaud.

Ceci permet de favoriser l'envoi direct d'air froid, éventuellement climatisé, dans l'habitacle en minimisant les pertes de charge.

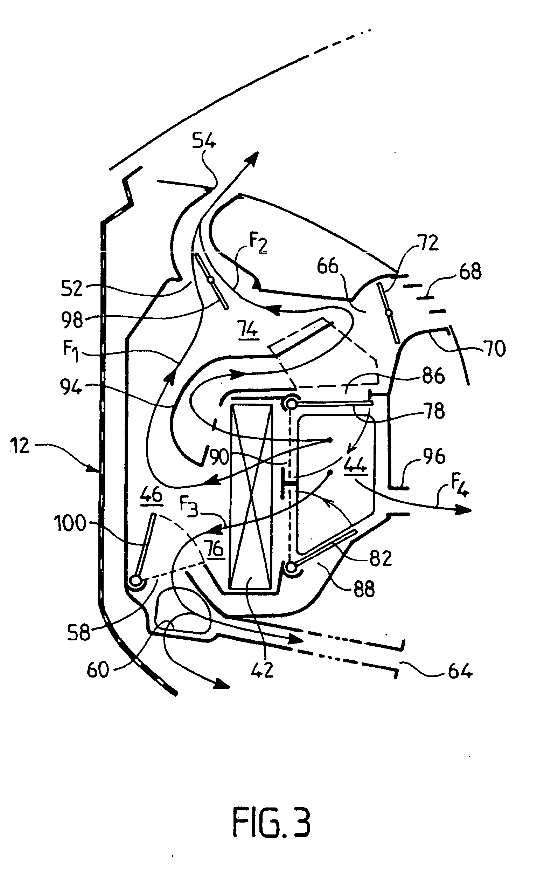

Le fonctionnement du dispositif de l'invention sera maintenant expliqué en référence aux Figures 3 à 5.

Dans le mode "tout chaud", c'est-à-dire "chaud maximum", de la Figure 3, les volets 78 et 82 ferment respectivement l'ouverture supérieure 86 et l'ouverture inférieure 82. Tout l'air froid de la chambre d'air froid 44 est obligé de gagner la chambre d'air chaud 46 en traversant le radiateur 42. Une partie du flux d'air chaud gagne directement la sortie dégivrage 52 (flèche F1), tandis qu'une autre partie gagne la même sortie dégivrage en passant par le déflecteur 94, comme montré par la flèche F2.

Dans cette position, le volet 98 contrôlant la sortie dégivrage est ouvert. Le flux d'air chaud gagne également la sortie chauffage-pieds 58 dont le volet 100 est ouvert, comme montré par la flèche F3. Par ailleurs, de l'air froid est envoyé directement dans l'habitacle par la sortie 96 pour assurer une ventilation permanente en air froid, comme montré par la flèche F4 . Dans ce mode, le volet 72 est fermé pour empêcher l'air chaud d'être envoyé dans l'habitacle par les buses d'aération.

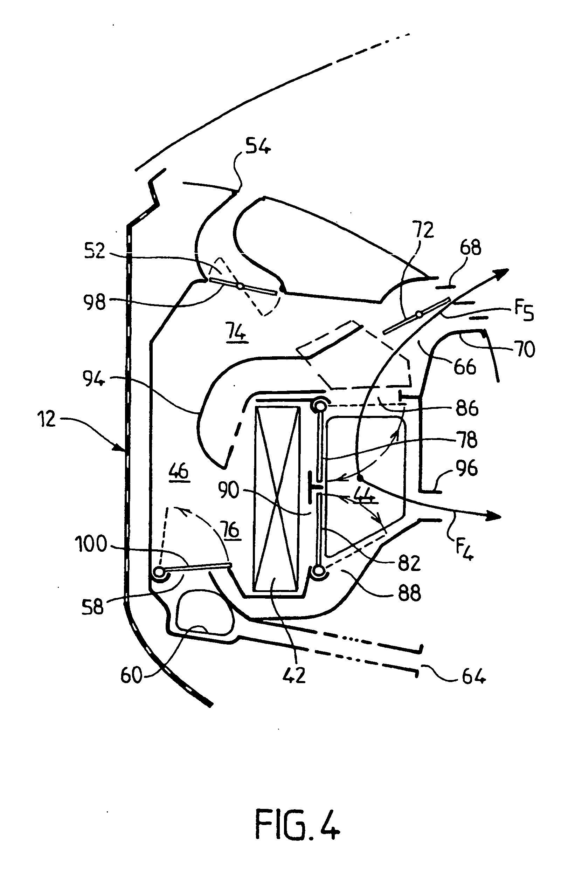

Dans le mode "tout froid" ou "froid maximum" de la Figure 4, les volets 78 et 82 obturent conjointement l'ouverture centrale 90. Dans cette position, les volets 98 et 100 sont fermés, tandis que le volet 72 est ouvert. Par conséquent, l'air froid est obligé de passer dans l'habitacle par les buses d'aération, comme montré par la flèche F5. D'autre part, une ventilation permanente est assurée, comme dans le mode précédent, au travers de la sortie 96, comme montré par la flèche F4.

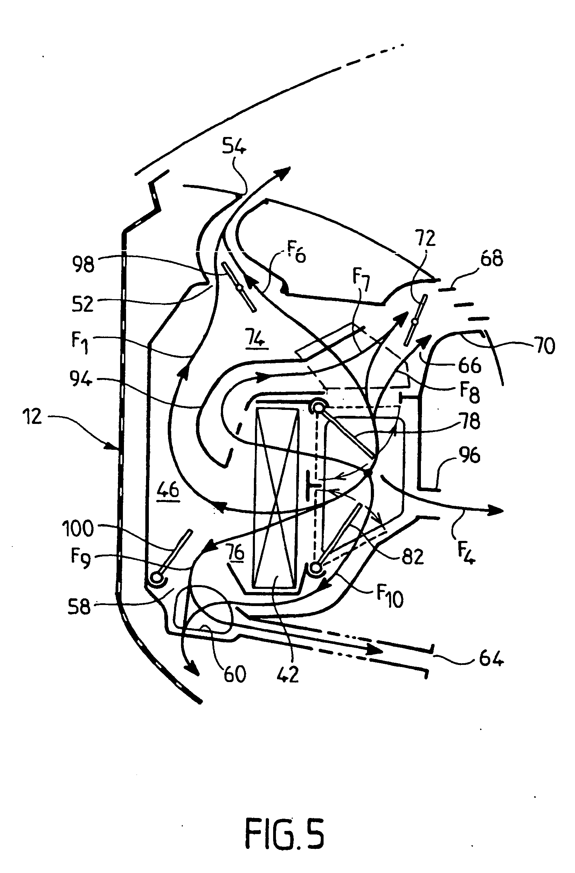

Dans le mode de mixage de la Figure 5, les volets 78 et 82 occupent une position intermédiaire entre la position de pleine ouverture et la position de pleine fermeture. Egalement, les volets 72, 98 et 100 sont ouverts. Une partie de l'air froid traverse le radiateur et gagne directement la sortie dégivrage en formant un flux chaud, comme montré par la flèche F1.

Une autre partie du flux d'air n'est pas réchauffée, traverse l'ouverture supérieure 86 et gagne directement la sortie dégivrage, comme montré par la flèche F6. Ainsi, les buses de dégivrage reçoivent un mélange d'air chaud et d'air froid.

Une partie du flux d'air chaud gagne la sortie aération en passant par le déflecteur 94, comme montré par la flèche F7. Une autre partie du flux d'air, qui n'est pas réchauffée, traverse l'ouverture supérieure 86 et gagne directement la sortie aération, comme montré par la flèche F8. Il en résulte que les buses d'aération sont alimentées par un flux d'air chaud et un flux d'air froid en procurant une stratification de température pour envoyer un flux d'air plus frais vers le visage des occupants du véhicule.

En outre, une partie du flux d'air traverse le radiateur de chauffage et gagne la sortie de chauffage-pieds 58, comme montré par la flèche F9. Une partie du flux d'air froid n'est pas réchauffée, traverse l'ouverture inférieure 88 et gagne aussi la sortie de chauffage-pieds, comme montré par la flèche F10. Ainsi, la sortie de chauffage-pieds 58 est alimentée conjointement par de l'air chaud et de l'air froid. Là encore, une ventilation centrale permanente en air froid est assurée, comme montré par la flèche F4.

Les volets 78 et 82 peuvent occuper d'autres positions intermédiaires pour procurer différentes possibilités d'ajustement de température.

Comme indiqué précédemment, les moyens de commande 92 des volets peuvent définir une loi choisie.

L'invention n'est pas limitée aux modes de réalisation décrits précédemment et s'étend à d'autres variantes de réalisation.

Ainsi, comme déjà indiqué, le pulseur pourrait occuper une position différente de celle montrée à la Figure 1.

L'invention trouve une application dans les véhicules automobiles.

## Revendications

1. Dispositif de chauffage et/ou climatisation de l'habitacle d'un véhicule automobile, comprenant un boîtier (18) agencé pour être disposé en arrière d'un tablier (12) séparant le compartiment moteur (C) de l'habitacle (H), le boîtier étant muni d'une arrivée d'air froid (28) et logeant un radiateur de chauffage (42), et comprenant des moyens de mixage d'air pour produire un flux d'air à température ajustée, ainsi que des sorties de dégivrage (52), d'aération (66) et de chauffage-pieds (58) alimentées par ce flux d'air à température ajustée, l'arrivée d'air froid (28) débouchant dans une chambre d'air froid (44) située à l'arrière du boîtier (18) du côté de la sortie aération (66), une chambre d'air chaud (46) étant située à l'avant du boîtier (18) du côté des sorties dégivrage (52) et chauffage-pieds (58) en étant alimentée par un flux d'air issu de la chambre d'air froid et/ou réchauffé en traversant le radiateur de chauffage (42) dans une direction généralement horizontale de l'arrière vers l'avant, **caractérisé en ce que** la chambre d'air froid (44) et la chambre d'air chaud (46) communiquent avec deux chambres de mixage (74, 76) alimentant les sorties d'air.

2. Dispositif selon la revendication 1, **caractérisé en ce que** le radiateur de chauffage (42) est implanté dans une position sensiblement verticale et transversale entre la chambre d'air froid (44) et la chambre d'air chaud (46).

3. Dispositif selon l'une des revendications 1 et 2, **caractérisé en ce qu**'il comprend une chambre de mixage supérieure (74) communiquant avec la sortie dégivrage (52) et la sortie aération (66), et une chambre de mixage inférieure (76) communiquant avec la sortie chauffage-pieds (58), et en ce que les moyens de mixage (78, 82) sont interposés entre ces deux chambres de mixage et la chambre d'air froid et la chambre d'air chaud.

4. Dispositif selon la revendication 3, **caractérisé en ce que** les moyens de mixage comprennent un volet de mixage supérieur (78) déplaçable entre une position dite "tout chaud" en laquelle il obture une ouverture supérieure (86) faisant communiquer la chambre d'air froid (44) et la chambre de mixage supérieure (74) au travers du radiateur de chauffage (42) et une position dite "tout froid" en laquelle il obture au moins en partie une ouverture centrale (90) faisant communiquer la chambre d'air froid (44) et la chambre d'air chaud (46), ainsi qu'un volet de mixage inférieur (82) déplaçable entre la position dite "tout chaud" en laquelle il obture une ouverture inférieure (88) faisant communiquer la chambre d'air froid (44) et la chambre de mixage inférieure (76) au travers du radiateur de chauffage (42) et la position dite "tout froid" en laquelle il obture au moins en partie l'ouverture centrale (90) faisant communiquer la chambre d'air froid (44) et la chambre d'air chaud (46).

5. Dispositif selon la revendication 4, **caractérisé en ce que** le volet de mixage supérieur (78) et le volet de mixage inférieur (82) sont des volets de type drapeau montés pivotants autour d'axes respectifs (80, 84) qui s'étendent parallèlement entre eux et dans une direction sensiblement horizontale.

6. Dispositif selon l'une des revendications 4 et 5, **caractérisé en ce que** le volet de mixage supérieur (78) et le volet de mixage inférieur (82) sont reliés à des moyens de commande (92) agencés pour les faire pivoter de manière coordonnée et selon une loi choisie.

7. Dispositif selon l'une des revendications 3 à 6, **caractérisé en ce que** la chambre de mixage supérieure (74) loge des moyens déflecteurs (94) agencés pour dévier une partie du flux d'air chaud issu du radiateur de chauffage (42) vers la sortie aération (66).

8. Dispositif selon l'une des revendications 1 à 7, **caractérisé en ce que** la chambre d'air froid (44) communique avec une sortie aération directe (96) qui est agencée pour être alimentée uniquement en air froid et envoyer cet air froid directement dans l'habitacle (H).

9. Dispositif selon l'une des revendications 1 à 8, **caractérisé en ce que** la sortie chauffage-pieds (58) alimente au moins une buse avant (60) et au moins une buse arrière (64).

10. Dispositif selon l'une des revendications 1 à 9, **caractérisé en ce qu**'il comprend en outre un pulseur d'air (30) agencé pour envoyer de l'air froid, éventuellement climatisé, dans l'arrivée d'air (28) du boîtier (18).

11. Dispositif selon la revendication 10, **caractérisé en ce qu**'un évaporateur (36) est interposé entre le pulseur d'air (30) et l'arrivée d'air (28) du boîtier (18).

12. Dispositif selon l'une des revendications 10 et 11, **caractérisé en ce que** le pulseur d'air (30) est disposé latéralement par rapport au boîtier (18) pour former un ensemble oblong agencé pour être implanté dans une position générale horizontale contre le tablier (12).

## Claims

1. Heating and/or air conditioning device for a motor vehicle passenger compartment, comprising a housing (18) designed to be arranged to the rear of a bulkhead (12) separating the engine compartment (C) from the passenger compartment (H), the housing being provided with a cold air inlet (28) and containing a heating radiator (42), and comprising air mixing means for producing a stream of air at a regulated temperature, and defrosting (52), ventilation (66) and foot-warming (58) outlets supplied by this stream of regulated-temperature air, the cold air inlet (28) opening into a cold air chamber (44) situated at the rear of the housing (18) near the ventilation outlet (66), and a hot air chamber (46) being situated at the front of the housing (18) near the defrosting (52) and foot-warming (58) outlets and being supplied by a stream of air from the cold air chamber and/or air heated by having passed through the heating radiator (42) in a generally horizontal forward direction, the said device being **characterized in that** the cold air chamber (44) and the hot air chamber (46) communicate with two mixing chambers (74, 76) supplying the air outlets.

2. Device according to Claim 1, **characterized in that** the heating radiator (42) is mounted in a generally vertical and transverse position between the cold air chamber (44) and the hot air chamber (46).

3. Device according to either of Claims 1 and 2, **characterized in that** it comprises an upper mixing chamber (74) communicating with the defrosting outlet (52) and with the ventilation outlet (66), and a lower mixing chamber (76) communicating with the foot-warming outlet (58), and **in that** the mixing means (78, 82) are interposed between these two mixing chambers on the one hand and the cold air chamber and hot air chamber on the other.

4. Device according to Claim 3, **characterized in that** the mixing means comprise an upper mixing shutter (78) movable between a so-called "all hot" position in which it closes an upper opening (86), so making the cold air chamber (44) and the upper mixing chamber (74) communicate through the heating radiator (42), and a so-called "all cold" position in which it at least partly closes a central opening (90), so making the cold air chamber (44) and the hot air chamber (46) communicate, and a lower mixing shutter (82) movable between the so-called "all hot" position in which it closes a lower opening (88), so making the cold air chamber (44) and the lower mixing chamber (76) communicate through the heating radiator (42) and the so-called "all cold" position in which it at least partly closes the central opening (90), so making the cold air chamber (44) and the hot air chamber (46) communicate.

5. Device according to Claim 4, **characterized in that** the upper mixing shutter (78) and the lower mixing shutter (82) are flap-type shutters pivoting about respective axes (80, 84) which extend parallel to each other in a generally horizontal direction.

6. Device according to either of Claims 4 and 5, **characterized in that** the upper mixing shutter (78) and the lower mixing shutter (82) are connected to control means (92) designed to pivot them in a coordinated manner and in accordance with a selected mathematical relationship.

7. Device according to one of Claims 3 to 6, **characterized in that** the upper mixing chamber (74) contains deflector means (94) designed to divert part of the stream of hot air coming from the heating radiator (42) to the ventilation outlet (66).

8. Device according to one of Claims 1 to 7, **characterized in that** the cold air chamber (44) communicates with a direct ventilation outlet (96) which is designed to be supplied with cold air only and to send this cold air directly into the passenger compartment (H).

9. Device according to one of Claims 1 to 8, **characterized in that** the foot-warming outlet (58) supplies at least one front nozzle (60) and at least one rear nozzle (64).

10. Device according to one of Claims 1 to 9, **characterized in that** it also comprises an air blower (30) designed to send cold, optionally conditioned air into the air inlet (28) of the housing (18).

11. Device according to Claim 10, **characterized in that** an evaporator (36) is interposed between the air blower (30) and the air inlet (28) of the housing (18).

12. Device according to either of Claims 10 and 11, **characterized in that** the air blower (30) is arranged laterally relative to the housing (18) to form an elongate assembly designed to be mounted in a general horizontal position against the bulkhead (12).

## Patentansprüche

1. Vorrichtung zur Heizung und/oder Klimatisierung des Fahrzeuginnenraums eines Kraftfahrzeugs, mit einem Gehäuse (18), das ausgelegt ist, um an der Rückseite einer Schutzwand (12) angeordnet zu werden, die den Motorraum (C) vom Fahrzeuginnenraum (H) trennt, wobei das Gehäuse mit einer Kaltluftzuführung (28) ausgestattet ist und einen Heizstrahler (42) aufnimmt, und mit Mitteln zur Luftmischung, um einen Luftstrom mit eingestellter Temperatur zu erzeugen, sowie mit Enteisungs- (52), Lüftungs- (66) und Fußheizungsausgängen (58), die von diesem Luftstrom mit eingestellter Temperatur gespeist werden, wobei die Kaltluftzuführung (28) in eine Kaltluftkammer (44) mündet, die sich an der Rückseite des Gehäuses (18) auf der Seite des Lüftungsausgangs (66) befindet, wobei eine Warmluftkammer (46) sich an der Vorderseite des Gehäuses (18) auf der Seite der Enteisungs- (52) und Fußheizungsausgänge (58) befindet und von einem Luftstrom gespeist wird, der von der Kaltluftkammer stammt und/oder erwärmt wird, indem er den Heizstrahler (42) in einer allgemein waagrechten Richtung von hinten nach vorne durchquert, **dadurch gekennzeichnet, dass** die Kaltluftkammer (44) und die Warmluftkammer (46) mit zwei Mischkammern (74, 76) in Verbindung stehen, die die Luftausgänge speisen.

2. Vorrichtung nach Anspruch 1, **dadurch gekennzeichnet, dass** der Heizstrahler (42) in einer im Wesentlichen senkrechten und transversalen Richtung zwischen der Kaltluftkammer (44) und der Warmluftkammer (46) angeordnet ist.

3. Vorrichtung nach einem der Ansprüche 1 und 2, **dadurch gekennzeichnet, dass** sie eine obere Mischkammer (74), die mit dem Enteisungsausgang (52) und dem Lüftungsausgang (66) in Verbindung steht, und eine untere Mischkammer (76) aufweist, die mit dem Fußheizungsausgang (58) in Verbindung steht, und dass die Mischmittel (78, 82) zwischen diese beiden Mischkammern und die Kaltluftkammer und die Warmluftkammer eingefügt sind.

4. Vorrichtung nach Anspruch 3, **dadurch gekennzeichnet, dass** die Mischmittel eine obere Mischklappe (78), die zwischen einer Stellung "ganz warm", in der sie eine obere Öffnung (86) verschließt, wodurch die Kaltluftkammer (44) und die obere Mischkammer (74) über den Heizstrahler (42) verbunden werden, und einer Stellung "ganz kalt" verschiebbar ist, in der sie eine zentrale Öffnung (90) zumindest zum Teil verschließt, die die Kaltluftkammer (44) mit der Warmluftkammer (46) verbindet, sowie eine untere Mischklappe (82) aufweisen, die zwischen der Stellung "ganz warm", in der sie eine untere Öffnung (88) verschließt, wodurch die Kaltluftkammer (44) und die untere Mischkammer (76) über den Heizstrahler (42) verbunden werden, und der Stellung "ganz kalt" verschiebbar ist, in der sie die zentrale Öffnung (90) zumindest zum Teil verschließt, die die Kaltluftkammer (44) mit der Warmluftkammer (46) verbindet.

5. Vorrichtung nach Anspruch 4, **dadurch gekennzeichnet, dass** die obere Mischklappe (78) und die untere Mischklappe (82) Klappen vom Typ "Fahne" sind, die um jeweilige Achsen (80, 84) schwenkbar montiert sind, die sich parallel zueinander und in einer im Wesentlichen waagrechten Richtung erstrecken.

6. Vorrichtung nach einem der Ansprüche 4 und 5, **dadurch gekennzeichnet, dass** die obere Mischklappe (78) und die untere Mischklappe (82) mit Steuermitteln (92) verbunden sind, die ausgelegt sind, um sie koordiniert und gemäß einem gewählten Gesetz schwenken zu lassen.

7. Vorrichtung nach einem der Ansprüche 3 bis 6, **dadurch gekennzeichnet, dass** die obere Mischkammer (74) Umlenkmittel (94) aufnimmt, die ausgelegt sind, um einen Teil des vom Heizstrahler (42) kommenden warmen Luftstroms zum Lüftungsausgang (66) umzuleiten.

8. Vorrichtung nach einem der Ansprüche 1 bis 7, **dadurch gekennzeichnet, dass** die Kaltluftkammer (44) mit einem direkten Lüftungsausgang (96) in Verbindung steht, der ausgelegt ist, um nur mit Kaltluft gespeist zu werden und diese Kaltluft direkt in den Fahrzeuginnenraum (H) zu schicken.

9. Vorrichtung nach einem der Ansprüche 1 bis 8, **dadurch gekennzeichnet, dass** der Fußheizungsausgang (58) mindestens eine vordere Düse (60) und mindestens eine hintere Düse (64) speist.

10. Vorrichtung nach einem der Ansprüche 1 bis 9, **dadurch gekennzeichnet, dass** sie außerdem ein Luftgebläse (30) aufweist, das ausgelegt ist, um Kaltluft, ggf. klimatisiert, in die Luftzuführung (28) des Gehäuses (18) zu schicken.

11. Vorrichtung nach Anspruch 10, **dadurch gekennzeichnet, dass** ein Verdunster (36) zwischen dem Luftgebläse (30) und der Luftzuführung (28) des Gehäuses (18) angeordnet ist.

12. Vorrichtung nach einem der Ansprüche 10 und 11, **dadurch gekennzeichnet, dass** das Luftgebläse (30) seitlich bezüglich des Gehäuses (18) angeordnet ist, um eine längliche Einheit zu bilden, die ausgelegt ist, um in einer allgemein waagrechten Position gegen die Schutzwand (12) eingesetzt zu werden.
